Europäisches Patentamt

European Patent Office

Office européen des brevets

(11) Numéro de publication: **0 235 837**
**A2**

## DEMANDE DE BREVET EUROPEEN

(21) Numéro de dépôt: **87200145.8**

(51) Int. Cl.4: **G01N 29/04**

(22) Date de dépôt: **02.02.87**

(30) Priorité: **04.02.86 FR 8601500**

(43) Date de publication de la demande:
**09.09.87 Bulletin 87/37**

(84) Etats contractants désignés:
**DE FR GB SE**

(71) Demandeur: **Laboratoires d'Electronique et de Physique Appliquée L.E.P.**
**3, Avenue Descartes**
**F-94450 Limeil-Brévannes(FR)**
**FR**
Demandeur: **N.V. Philips' Gloeilampenfabrieken**
**Groenewoudseweg 1**
**NL-5621 BA Eindhoven(NL)**
**DE GB SE**

(72) Inventeur: **Coursant, Roger Henri Société Civile S.P.I.D.**
**209, rue de l'Université**
**F-75007 Paris(FR)**
Inventeur: **Mequio, Claude Robert Société Civile S.P.I.D.**
**209, rue de l'Université**
**F-75007 Paris(FR)**

(74) Mandataire: **Landousy, Christian et al**
**Société Civile S.P.I.D. 209, Rue de l'Université**
**F-75007 Paris(FR)**

(54) Appareil d'examen de milieux par échographie ultrasonore.

(57) Appareil d'examen de milieux par échographie ultrasonore comprenant une structure transductrice ultrasonore (600) associée à un étage d'émission (200) pour l'émission répétée d'ondes ultrasonores vers le milieu à explorer et à un étage de réception et de traitement (300) pour la réception et le traitement des signaux échographiques renvoyés vers ladite structure par les obstacles rencontrés par les ondes émises. La structure transductrice ultrasonore (600) est soit un transducteur monoélément à large bande, soit une barrette de transducteurs ultrasonores élémentaires associée à un circuit (610) de commande de l'ouverture de ladite barrette, à un circuit d'aiguillage (730) et à p voies en parallèle (710a) à (710p) pour l'introduction des retards en vue de la focalisation à l'émission. Cette structure est précédée d'un circuit d'adaptation électrique (700) composé de n voies en parallèle et de deux circuits de commutation à n positions placés à chaque extrémité de ces voies pour en sélectionner une seule selon la fréquence de travail choisie. Chacune de ces voies du circuit d'adaptation électrique comprend un filtre adapté à ladite fréquence de travail, et l'étage d'émission (200) et l'étage de réception et de traitement (300) sont également adaptés à cette fréquence de travail.

Application : Echographes médicaux

FIG.5

## APPAREIL D'EXAMEN DE MILIEUX PAR ECHOGRAPHIE ULTRASONORE

La présente invention concerne un appareil d'examen de milieux par échographie ultrasonore comprenant une structure transductrice ultrasonore associée à un étage d'émission, pour l'émission répétée d'ondes ultrasonores vers le milieu à explorer, et à un étage de réception et de traitement, pour la réception et le traitement des signaux échographiques renvoyés vers ladite structure transductrice par les obstacles rencontrés par les ondes émises.

Le but de l'invention est de proposer un appareil d'examen par échographie ultrasonore dans lequel il est possible d'adapter de façon très simple les charactéristiques électriques des circuits à la fréquence de travail, et ce dans une large gamme de fréquences, d'au moins une octave par exemple.

A cet effet, un premier mode de réalisation de l'appareil selon l'invention est caractérisé en ce que la structure transductrice ultrasonore est un transducteur monoélément à large bande, en ce que ce transducteur est précédé d'un circuit d'adaptation électrique composé de n voies en parallèle et de deux circuits de commutation à n positions placés à chaque extrémité de ces voies pour en sélectionner une seule selon la fréquence de travail choisie, en ce que chacune de ces voies du circuit d'adaptation électrique comprend un filtre adapté à ladite fréquence de travail, et en ce que l'étage d'émission et l'étage de réception et de traitement sont également adaptés à cette fréquence de travail.

Un deuxième mode de réalisation de l'appareil selon l'invention est caractérisé en ce que la structure transductrice ultrasonore est une barrette de transducteurs ultrasonores élémentaires associée à un circuit de commande de l'ouverture de ladite barrette, à un circuit d'aiguillage et à p voies en parallèle pour l'introduction des retards en vue de la focalisation à l'émission, en ce que ladite barrette et ces éléments associés sont précédés d'un circuit d'adaptation électrique composé de n voies en parallèle et de deux circuits de commutation à n positions placés à chaque extrémité de ces voies pour en sélectionner une seule selon la fréquence de travail choisie, en ce que chacune de ces voies du circuit d'adaptation électrique comprend un filtre adapté à ladite fréquence de travail, et en ce que l'étage d'émission et l'étage de réception et de traitement sont également adaptés à cette fréquence de travail.

De tels appareils multifréquences sont avantageux en ce sens que, tout en conservant la même structure transductrice avec sa même ouverture et sa même distance focale, il est possible de modifier la pénétration ultrasonore et la résolution latérale par un simple changement de fréquence de travail. Une telle propriété ouvre la voie, en imagerie échographique, à la réalisation de diagnostics plus complets, effectués d'abord en profondeur puis en surface (ou à faible profondeur) avec la même structure transductrice.

Inversement, en employant des structures transductrices distinctes avec des ouvertures et des résolutions latérales respectivement différentes mais à focale et à fréquence de travail constantes, la présence des circuits d'adaptation permet d'obtenir des images construites à partir de signaux dont les caractéristiques spectrales (fréquence centrale et bande passante), pouvant être réajustées, sont identiques ou très similaires.

Enfin, l'utilisation de l'invention est également avantageuse pour obtenir simplement et rapidement des informations échographiques à partir de signaux de fréquence centrale du spectre f et de signaux de fréquence centrale du spectre 2f et en bénéficiant d'une possibilité d'adjustement de l'emplacement de cette octave de fréquences de travail. Une telle solution est en effet intéressante pour l'exploitation du paramètre B/A de la dispersion de la vitesse de propagation des ondes en acoustique non linéaire où, pour une émission à une fréquence déterminée, peuvent être reçus des signaux à la fréquence double de celle-ci.

Les particularités et avantages de l'invention apparaîtront maintenant de façon plus précise dans la description qui suit et dans les dessins annexés, donnés à titre d'exemples non limitatifs et dans lesquels :

-les figures 1a et 1b montrent les éléments essentiels d'une chaîne acoustique d'émission-réception de signaux ultrasonores, la figure 1a concernant l'émission et la figure 1b la réception ;

-la figure 2 montre une courbe représentative du module du spectre de transfert intrinsèque émission-réception de la structure transductrice et montre également deux exemples de courbe du module du spectre de transfert de liaison électrique pour deux cas de valeurs des paramètres des éléments électriques participant audit transfert ;

-les figures 3 et 5 montrent deux modes de réalisation de l'appareil selon l'invention ;

-la figure 4 montre un exemple de réalisation d'un circuit d'adaptation conforme à la présente invention.

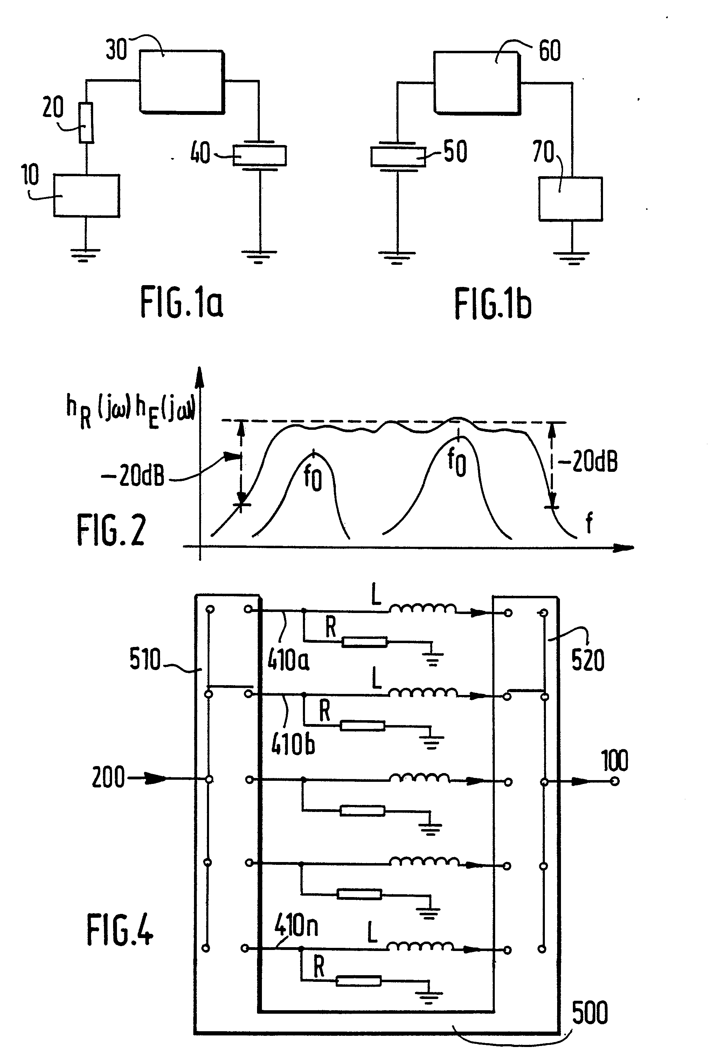

La chaîne acoustique représentée sur les figures 1a (émission) et 1b (réception) comprend essentiellement un générateur de signaux électriques d'excitation 10, d'impédance de sortie 20, fournissant lesdits signaux à un transducteur 40 par l'intermédiaire d'un premier circuit d'adaptation électrique 30. Le transducteur 40 fonctionne en mode émetteur. Un transducteur de réception 50, ou éventuellement le même transducteur que précédemment mais fonctionnant en mode récepteur, reçoit les signaux échographiques (les ondes ultrasonores renvoyées vers le transducteur de réception) et fournit des signaux électriques correspondants à une charge 70 par l'intermédiaire d'un deuxième circuit d'adaptation électrique 60. Cette charge 70 est soit l'impédance électrique d'une charge d'exploitation, soit l'impédance d'entrée d'un préamplificateur placé en tête d'une voie de traitement.

En adoptant les notations suivantes :

$E_0(t)$ = tension électrique aux bornes du générateur de signaux d'excitation 10 (t = le temps) ;

$V_S(t)$ = tension électrique aux bornes de la charge 70 (au lieu de prendre cette tension comme signal de sortie, on pourrait également prendre comme tel le courant $I_s(t)$ traversant cette charge) ;

$T_E(t)$ = réponse impulsionnelle de l'ensemble du filtre de liaison électrique en mode émetteur, ce filtre étant constitué de l'association en série de l'impédance de sortie 20 du générateur de signaux d'excitation, du premier circuit d'adaptation électrique 30 et de l'impédance $Z_T$ du transducteur en mode émetteur ;

$T_R(t)$ = réponse impulsionnelle de l'ensemble du filtre de liaison en mode récepteur, ce filtre étant de façon similaire constitué de l'association en série de l'impédance $Z_T$ du transducteur en mode récepteur, du deuxième circuit d'adaptation électrique 60 et de l'impédance $Z_c$ de la charge 70 ;

$h_E(t)$ = réponse impulsionnelle intrinsèque du transducteur en mode émetteur (c'est-à-dire la force acoustique engendrée en réponse à une excitation électrique du type impulsion de Dirac à l'entrée du transducteur) ;

$h_R(t)$ = de façon similaire, réponse impulsionnelle intrinsèque du transducteur en mode récepteur ;

prop(t) = P(t) = réponse impulsionnelle de l'opérateur de propagation, ledit opérateur prenant en compte l'ensemble du phénomène de propagation du champ acoustique dans le milieu de propagation, c'est-à-dire la diffraction, la diffusion, etc... ;

on peut alors écrire l'expression de convolution suivante :

$V_S(t) = T_R(t)*h_R(t)*P(t)*h_E(t)*T_E(t)*E_0(t)$ (1)

Dans le domaine de Fourier, cette relation de convolution devient :

$V_S(j\omega) = T_R(j\omega).h_R(j\omega).P(j\omega).h_E(j\omega).T_E(j\omega).E_0(j\omega)$ (2)

ou encore, sous la forme d'une fonction de transfert :

$$\frac{V_S(j\omega)}{E_0(j\omega)} = T_R(j\omega).T_E(j\omega).h_R(j\omega).h_E(j\omega).P(j\omega) \qquad (3)$$

Dans cette expression (3), $P(j\omega)$ représente le transfert de propagation, $T_R(j\omega).T_E(j\omega)$ le transfert global de liaison électrique, et $h_R(j\omega).h_E(j\omega)$ le transfert intrinsèque de transduction. A la propagation près, le transfert global de transduction est donc exprimé par l'ensemble de l'expression :

$T_R(j\omega).T_E(J\omega).h_R(j\omega).h_E(j\omega)$ (4)

Ainsi le module du spectre de la réponse impulsionnelle du transfert global de transduction est égal au produit du module du spectre de transfert de liaison électrique par le module du spectre de transfert intrinsèque de transduction :

$|T_R(j\omega).T_E(j\omega)|.|h_R(j\omega).h_E(j\omega)|$ (5)

Les modules de $T_E(j\omega)$ et de $T_R(j\omega)$ peuvent être par exemple des modules de systèmes du second ordre (c'est-à-dire exprimés par une fraction rationnelle en $\omega$ qui présente un polynôme en $\omega$ du second degré au dénominateur), permettant d'obtenir un effet de résonance. Les systèmes du second ordre peuvent être obtenus simplement à partir de circuits R L C. Si $C_0$ est la capacité du transducteur et R et L les valeurs globales respectivement des éléments résistifs et inductifs du filtre de liaison constitué pour l'adaptation de l'étage d'émission au transducteur, on peut écrire :

$$T_E(j\omega) = \frac{\dfrac{1}{j\,C_0\omega}}{R + j\,L\,\omega + \dfrac{1}{j\,C_0\omega}} \qquad (6)$$

3

ou encore, en multipliant par $j \, C_o \, \omega$ numérateur et dénominateur :

$$T_E(j \, \omega) = \frac{1}{j \, R \, C_o \omega - L \, C_o \omega^2 + 1} \qquad (7)$$

En ajustant L, on ajuste donc la valeur de la fréquence propre et donc, par suite, la fréquence de travail du transducteur. En ajustant R, on détermine la qualité de la résonance, d'autant plus pointue que R est faible, et donc la largeur de bande du filtre de liaison du second ordre ainsi constitué.

De même, dans le cas d'un filtre de liaison de même type utilisé pour l'adaptation du transducteur à l'étage de réception, on peut écrire :

$$T_R(j \, \omega) = \frac{R}{\dfrac{1}{jC_o\omega} + j \, L\omega + R} \qquad (8)$$

ou encore :

$$T_R(j \, \omega) = \frac{jRC_o\omega}{1 + jRC_o \, \omega - LC_o \, \omega^2} \qquad (9)$$

ce qui conduit aux mêmes conclusions quant aux rôles de L et R dans le filtre de réception. Le produit $T_E.T_R$ est alors exprimé par :

$$T_E(j \, \omega).T_R(j \, \omega) = \frac{jRC_o \, \omega}{(1 + jRC_o\omega - LC_o \, \omega^2)^2} \qquad (10)$$

dont le dénominateur a pour module :
$(1 - LC_o \, \omega^2)^2 + R^2 C_o^2 \, \omega^2$
module qui est minimal pour :

$$L = \frac{1}{C_o \, \omega_o^2}$$

($\omega_o$ étant la pulsation qui correspond à une fréquence de travail souhaitée prise à l'intérieur de la bande passante intrinsèque du transducteur). On peut donc connaître la valeur d'inductance à adopter pour obtenir une fréquence de travail déterminée. Le choix de R permet ensuite le réglage de la largeur $\Delta\omega$ du spectre à -6 dB. On a en effet, $\phi$ étant le coefficient de qualité :

$$\phi = \frac{L \, \omega_o}{R} = \frac{\omega_o}{\Delta\omega}$$

d'où : $\Delta\omega = R/L$.

Conformément à l'invention, on choisit donc un transducteur intrinsèquement de large bande de fréquence et l'on considère un transfert de liaison électrique de bande plus étroite mais dont on peut faire varier de façon continue les caractéristiques spectrales c'est-à-dire la fréquence centrale $f_o$ et la largeur de bande relative à -20 dB. Par transducteur intrinsèquement de large bande, on entend un transducteur pour lequel on a :

4

$$\frac{f_c^+(-20dB) - f_c^-(-20dB)}{f_c(-20dB)} > 1 \qquad (11)$$

$f_c^+{}_{(-20dB)}$ et $f_c^-{}_{(-20dB)}$ étant les fréquences de coupure supérieure et inférieure à -20dB et $f_{c(-20dB)}$ représentant la demi-somme de ces fréquences de coupure supérieure et inférieure. Un exemple de transducteur satisfaisant à cette condi tion (11) est obtenu par exemple si $f_c^+{}_{(-20dB)}$ et $f_{c(-20dB)}$ sont égales respectivement à 7,5 et 2,5 mégahertz.

La figure 2 donne un exemple de représentation de ces différentes fréquences sur une courbe du module du spectre de transfert intrinsèque de transduction, à l'intérieur de laquelle sont aussi représentés deux exemples de courbes du module du spectre de transfert de liaison électrique pour deux cas distincts de valeurs des paramètres des éléments électriques qui participent audit transfert de liaison, c'est-à-dire pour deux valeurs distinctes de la fréquence centrale $f_o$.

Selon l'invention, on peut, sur la figure 2, passer de l'une de ces deux courbes-exemples à l'autre, et, d'une manière générale, de n'importe quelle courbe de module du spectre de transfert de liaison électrique à n'importe quelle autre également comprise à l'intérieur de la courbe du module du spectre de transfert intrinsèque de transduction, simplement en opérant une variation continue, ou au moins progressive, des paramètres des éléments électriques. Une telle variation correspond à des réponses de transduction de fréquences centrales $f_o$ du spectre de la réponse impulsionnelle différentes, et donc à des fréquences de travail différentes.

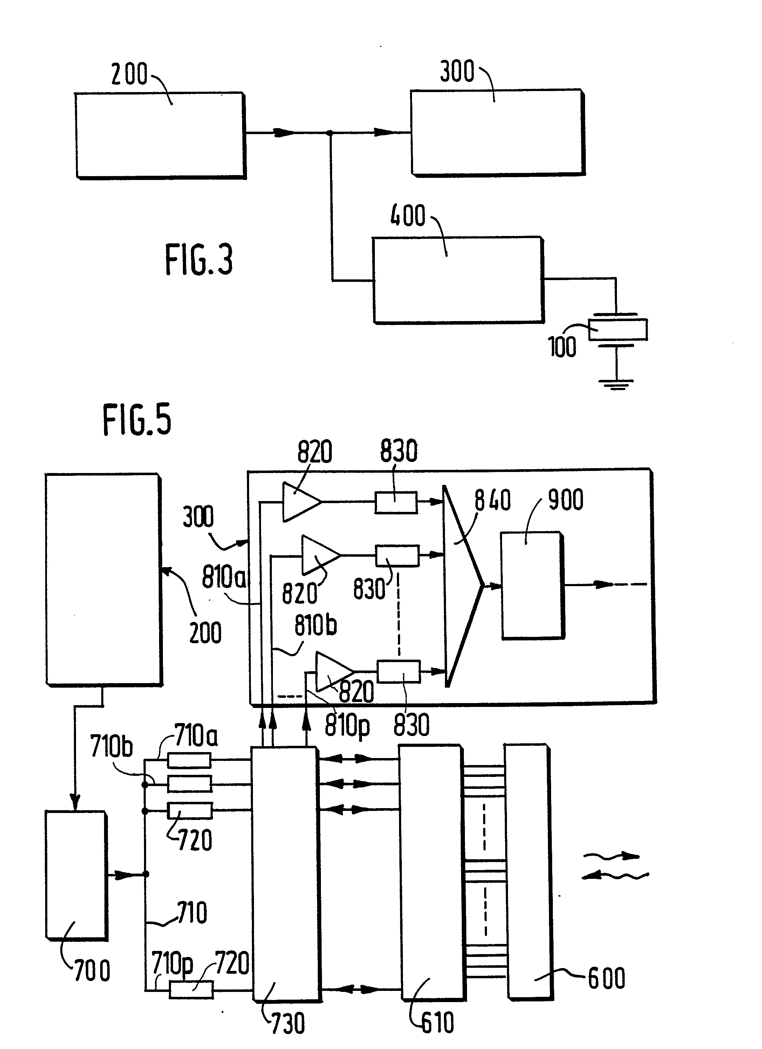

L'appareil de mise en oeuvre de la présente invention comprend alors, dans le mode de réalisation préférentiel représenté sur la figure 3, un transducteur ultrasonore monoélément 100, tel que ceux utilisés dans les échographes de type B manuels ou à balayage mécanique sectoriel et auquel sont associés d'une part un étage 200 d'émission répétée d'ondes ultrasonores vers le milieu à explorer et d'autre part un étage 300 de réception et de traitement des signaux échographiques renvoyés vers le transducteur par les obstacles rencontrés par ces ondes ultrasonores. Un circuit d'aiguillage non représenté et de type bien connu peut être interposé entre le transducteur 100, l'étage d'émission 200 et l'étage de réception 300, pour éviter notamment l'aveuglement de ce dernier par l'étage d'émission. L'étage de réception et de traitement 300 est également de type classique et ne sera donc pas décrit davantage. On peut simplement rappeler que cet étage comprend essentiellement des circuits assurant les fonctions de préamplification, mise en forme, contrôle automatique de gain en fonction du temps, visualisation et/ou mémorisation.

Le transducteur 100, commun aux fonctions d'émission et de réception dans le cas présent, est un transducteur large bande. De tels transducteurs sont connus notamment de la thèse de Doctorat de l'Université de R.H. Coursant, "Nouveaux matériaux piézoélectriques pour transducteurs ultrasonores", soutenue le 19 juin 1984 à l'Université Pierre et Marie Curie, à Paris, et qui décrit différents types de transducteurs à plusieurs couches interférentielles d'adaptation acoustique sur la face avant, dites couches $\lambda/4$. Des transducteurs correspondant à cette exigence de bande passante sont également connus du document FR-A-2546703 (PHF 83-538), qui décrit un transducteur utilisable dans le cas de la présente invention, ou encore du document FR-A-2551611 décrivant un transducteur symétrique et une variante de celui-ci qui conviennent pour la présente application. Quel que soit le transducteur utilisé, il est préférable, pour une mise en oeuvre intéressante de l'invention, que le largeur de bande soit au moins de 100 % (voir l'inégalité (11)), une valeur de 150 % convenant très bien.

L'étage d'émission 200 comprend une structure du type classique, puisqu'il comprend essentiellement un circuit d'horloge et de séquencement ainsi qu'un circuit de génération de signaux électriques d'excitation du transducteur. On précisera cependant que le spectre de ces signaux doit être accordable sur la fréquence de travail, susceptible de varier, à moins que ces signaux ne soient composés d'impulsions minces du type Dirac, à spectre suffisamment large pour couvrir ladite gamme de variation de la fréquence de travail.

Conformément à l'invention, le transducteur 100 est précédée d'un circuit d'adaptation électrique 400 qui, comme le montre la figure 4, est composé de n voies en parallèle 410a, 410b, etc... et de deux circuits de commutation 510 et 520 à n positions, ces deux circuits pouvant être éventuellement jumelés à l'intérieur d'un même connecteur 500, et le nombre n étant égal à 5 dans le mode de réalisation de la figure 4. La borne commune du circuit de commutation 510 est reliée à la sortie du circuit de génération de signaux électriques de l'étage d'émission 200, et celle du circuit de commutation 520 au transducteur 100. Chacune des n voies (ici, des cinq voies) en parallèle comprend un circuit RL calculé pour une fréquence de travail déterminée, les valeurs de R et de L retenues dans l'exemple décrit étant les suivantes :
- R = 56 ohms et L = 2,8 microhenrys pour $f_o$ = 3 MHz ;

-R = 33 ohms et L = 1,6 microhenry pour $f_o$ = 4 MHz ;
-R = 23 ohms et L = 1 microhenry pour $f_o$ = 5 MHz ;
-R = 18 ohms et L = 0,7 microhenry pour $f_o$ = 6 MHz ;
-R = 15 ohms et L = 0,5 microhenry pour $f_o$ = 7 MHz.

De telles valeurs sont liées à la valeur de la capacité de transducteur 100. Bien entendu, sans sortir du cadre de l'invention, on peut proposer des variantes de réalisation de ce circuit d'adaptation électrique convenant pour des transducteurs de capacité différente. On peut en effet vouloir, tout en conservant approximativement les mêmes caractéristiques de bande passante, utiliser des transducteurs d'ouvertures différentes et donc de valeurs de capacité différentes. Dans ce cas, il faut, on l'a vu, accorder pour chaque transducteur, le spectre des signaux d'excitation, à moins que celui-ci ne soit déjà à large bande. Il est important, en tout cas, que les circuits d'adaptation aient une structure modulaire permettant la substitution de l'un à l'autre selon le transducteur choisi.

Dans le premier cas d'un accord spécifique du spectre des signaux d'excitation, il est avantageux, pour éviter d'éventuels réglages en deux endroits distincts de l'appareil, que le connecteur 500 soit renvoyé également au niveau du circuit de génération de signaux d'excitation comprenant alors un deuxième circuit d'adaptation, le connecteur 500 comprenant là un troisième circuit de commutation non représenté pour l'adaptation dudit circuit à la sélection de la fréquence de travail. De même, le connecteur 500 peut comprendre un quatrième circuit de commutation non représenté situé dans l'étage de réception et de traitement 300 et permettant la sélection du filtre de réception du préamplificateur en correspondance à celle de la fréquence de travail.

Enfin, il est intéressant de rendre automatique la commande de sélection de la fréquence de travail en prévoyant un circuit de commutation générale assurant la commande automatique du choix de ladite fréquence et la position des circuits de commutation du connecteur 500. Il peut être avantageux également de remplacer les circuits R L associés à la capacité de la structure transductrice des n voies en parallèle du circuit d'adaptation électrique 400 par des filtres plus sélectifs, par exemple par des filtres du troisième ou du quatrième ordre.

Dans une variante de réalisation de l'appareil selon l'invention, représentée maintenant sur la figure 5, on prévoit cette fois non plus un transducteur monoélément mais un transducteur multiéléments, par exemple une barrette linéaire de transducteurs ultrasonores à balayage séquentiel, ou même à balayage sectoriel (barrette de phase). Comme précédemment, l'étage d'émission 20 est de structure classique, avec la même exigence relative au spectre des signaux d'excitation électrique. La barrette linéaire de transducteurs 600 est précédée d'un circuit de commande d'ouverture 610 comprenant de façon classique les commutateurs de sélection des transducteurs ultrasonores élémentaires et définissant donc l'ouverture de la barrette.

Entre la sortie de l'étage d'émission 200 et ce circuit de commande d'ouverture 610 sont prévus successivement un circuit d'adaptation électrique 700 composé comme précédemment d'autant de voies en parallèle que de fréquences de travail souhaitables et de deux circuits de commutation à n positions, éventuellement jumelés dans un même connecteur, pour la sélection manuelle ou automatique, de ladite fréquence de travail, et p voies en parallèle 710a à 710p comprenant chacune une ligne à retard 720 pour la focalisation des signaux, ces p voies (p correspondant à l'ouverture de la barrette) se poursuivant jusqu'au circuit de commande d'ouverture 610 par l'intermédiaire d'un circuit d'aiguillage 730 (pour la séparation des modes de fonctionnement émission ou réception comme déjà vu précédemment).

L'étage de réception et de traitement 300 comprend, en sortie du circuit d'aiguillage 730, p voies 810a à 810p composées elles-mêmes en série, de façon connue, de préamplificateurs 820 et de lignes à retard 830 pour la focalisation, la sortie de ces lignes étant reliées aux p entrées d'un sommateur 840 pouvant inclure le circuit de contrôle automatique de gain en fonction du temps. Conformément à l'invention, l'étage 300 comprend également, en sortie du sommateur, un deuxième circuit d'adaptation électrique 900 composé de la même manière que précédemment de circuits R L C en parallèle, choisis directement en fonction des fréquences de travail, et de circuits de commutation basculant d'une manière synchronisée avec le basculement des circuits de commutation associés au circuit d'adaptation 700. L'étage 300 comprend enfin, en sortie de ce deuxième circuit d'adaptation électrique 900, les circuits classiques de mise en forme et de visualisation et/ou mémorisation déjà cités.

Une variante de ce mode de réalisation peut être obtenue par exemple en remplaçant le circuit d'adaptation électrique 700 par p circuits d'adaptation en parallèle situés en aval des lignes à retard à l'émission 720, respectivement entre la sortie de ces lignes et l'entrée correspondante du circuit d'aiguillage 730, ou bien encore en remplaçant le circuit d'adaptation électrique 900 par p circuits d'adaptation en parallèle situés en amont du sommateur 840, de préférence entre la sortie des lignes à retard à la réception 830 et l'entrée correspondante du sommateur, notamment dans le cas de réalisations intégrées. Les autres variantes de réalisation citées précédemment sont également applicables dans le cas de ces réalisations avec barrettes.

## Revendications

1. Appareil d'examen de milieux par échographie ultrasonore comprenant une structure transductrice ultrasonore associée à un étage d'émission pour l'émission répétée d'ondes ultrasonores vers le milieu à explorer et à un étage de réception et de traitement pour la réception et le traitement des signaux échographiques renvoyés vers ladite structure par les obstacles rencontrés par les ondes émises, caractérisé en ce que la structure transductrice ultrasonore est un transducteur monoélément à large bande, en ce que ce transducteur est précédé d'un circuit d'adaptation électrique composé de n voies en parallèle et de deux circuits de commutation à n positions placés à chaque extrémité de ces voies pour en sélectionner une seule selon la fréquence de travail choisie, en ce que chacune de ces voies du circuit d'adaptation électrique comprend un filtre adapté à ladite fréquence de travail, et en ce que l'étage d'émission et l'étage de réception et de traitement sont également adaptés à cette fréquence de travail.

2. Appareil d'examen de milieux par échographie ultrasonore comprenant une structure transductrice ultrasonore associée à un étage d'émission pour l'émission répétée d'ondes ultrasonores vers le milieu à explorer et à un étage de réception et de traitement pour la réception et le traitement des signaux échographiques renvoyés vers ladite structure transductrice par les obstacles rencontrés par les ondes émises, caractérisé en ce que la structure transductrice ultrasonore est une barrette de transducteurs ultrasonores élémentaires associée à un circuit de commande de l'ouverture de ladite barrette, à un circuit d'aiguillage et à p voies en parallèle pour l'introduction des retards en vue de la focalisation à l'émission, en ce que ladite barrette et ces éléments associés sont précédés d'un circuit d'adaptation électrique composé de n voies en parallèle et de deux circuits de commutation à n positions placés à chaque extrémité de ces voies pour en sélectionner une seule selon la fréquence de travail choisie, en ce que chacune de ces voies du circuit d'adaptation électrique comprend un filtre adapté à ladite fréquence de travail, et en ce que l'étage d'émission et l'étage de réception et de traitement sont également adaptés à cette fréquence de travail.

3. Appareil selon l'une des revendications 1 et 2, caractérisé en ce que l'étage d'émission comprend un générateur de signaux électriques d'excitation à spectre au moins égal à celui de la structure ultrasonore.

4. Appareil selon l'une des revendications 1 et 2, caractérisé en ce que les deux circuits de commutation sont jumelés à l'intérieur d'un même connecteur, en ce que l'étage d'émission comprend un deuxième circuit d'adaptation associé à un troisième circuit de commutation du connecteur pour l'adaptation dudit étage d'émission à la fréquence de travail, et en ce que le connecteur comprend dans l'étage de réception et de traitement un quatrième circuit de commutation pour l'adaptation du filtre de réception à la fréquence de travail.

5. Appareil selon l'une des revendications 1 à 4, caractérisé en ce qu'il comprend un circuit de commande automatique de la fréquence de travail couplé aux circuits de commutation des circuits d'adaptation.

FIG.1a

FIG.1b

FIG.2

FIG.4

FIG.3

FIG.5